# EUROPEAN PATENT SPECIFICATION

(11) **EP 4 458 006 B1**
(45) Date of publication and mention of the grant of the patent: **24.06.2026**
(21) Application number: 23750389.1
(22) Date of filing: 02.02.2023
(51) Int. Cl.: H04L 67/51, H04L 41/12, H04W 48/08, H04W 48/16, H04W 64/00, H04L 67/52

(54) **INTELLIGENT EDGE ENABLER CLIENT OPERATION**
INTELLIGENTER EDGE-ENABLER-CLIENT-BETRIEB
FONCTIONNEMENT DE CLIENT DE FACILITATEUR DE BORD INTELLIGENT

(30) Priority: 03.02.2022 US 202263267504 P
(43) Date of publication of application: 06.11.2024
(73) Proprietor: Apple Inc., Cupertino CA 95014 (US)
(72) Inventor: ZAUS, Robert, Cupertino, California 95014 (US); BADIC, Biljana, Cupertino, California 95014 (US); AGNEL, Mona, Cupertino, California 95014 (US); DREWES, Christian, Cupertino, California 95014 (US); AH SUE, Jonathan, Cupertino, California 95014 (US); WILHELM, Mikhail, Cupertino, California 95014 (US)
(74) Representative: Simmons & Simmons
(86) International application number: PCT/US2023/061835
(87) International publication number: WO 2023/150609

(56) References cited:
- US-A1- 2014 177 539
- US-A1- 2021 058 489
- US-A1- 2021 352 156
- US-A1- 2021 352 156
- US-A1- 2022 015 018
- US-A1- 2022 030 063
- US-A1- 2023 047 503
- "3 Generation Partnership Project; Technical Specification Group Services and System Aspects; Architecture for enabling Edge Applications; (Release 17)", no. V17.2.0, 31 December 2021 (2021-12-31), pages 1 - 163, XP052083589, Retrieved from the Internet <URL:https://ftp.3gpp.org/Specs/archive/23_series/23.558/23558-h20.zip 23558-h20.doc> [retrieved on 20211231]
- NATARAJAN SRIDHARAN; MOHAN SANTHOSH: "A Supervised Learning Approach for Reducing Latency during Context Switchover in 5G MEC", 2021 IEEE 18TH ANNUAL CONSUMER COMMUNICATIONS & NETWORKING CONFERENCE (CCNC), IEEE, 9 January 2021 (2021-01-09), pages 1 - 2, XP033885144, DOI: 10.1109/CCNC49032.2021.9369471

## Description

### Background

A user equipment (UE) may connect to an edge data network for access to edge computing services. Edge computing refers to performing computing and data processing at the network where the data is generated. When connected, application data may flow between the UE and an edge application server (EAS) of the edge data network.

The UE may be equipped with one or more edge enabler clients (EECs) to support one or more application clients running on the UE. An EEC may perform various operations related to procedures such as, but not limited to, service provisioning, EEC registration and EAS discovery. Thus, each EEC may be configured to handle a wide array of different parameters and perform a variety of different operations in support of applications running on the UE.

3GPP TS 23.558, no. V17.2.0 31 December 2021 represents the 3GPP standard disclosing the EAS discovery process. Further, US2021352156 discloses a method for EES (Edge Enabler Server) to coordinate an change of EAS (Edge Application Server) in case of UE context relocation (mobility/roaming situations)

### Summary

Some exemplary embodiments are related to a processor of a user equipment (UE) configured to perform operations. The operations include receiving location information associated with other devices that are to participate in a session with the UE, transmitting an edge application server (EAS) discovery request to an edge enabler server (EES), wherein the EAS discovery request includes UE location information and the location information associated with the other devices and receiving a discovery response from the EES, wherein the discovery response comprises EAS endpoint information.

Other exemplary embodiments are related to an edge enabler server (EES) configured to perform operations. The operations include receiving an edge application server (EAS) discovery request from a user equipment (UE), wherein the EAS discovery request includes UE location information and location information associated with the other devices that are to participate in a session with the UE and transmitting a discovery response from the EES, wherein the discovery response comprises EAS endpoint information.

Still further exemplary embodiments are related to a processor of a user equipment (UE) configured to perform operations. The operations include receiving a first request from an application client (AC) of the UE for access to an edge computing services, performing one or more operations for enabling edge applications, selecting one or more parameters to include in a second request to be sent to an edge computing component based on information learned from an edge enabler client (EEC) knowledge database and information collected from UE components and transmitting the second request to an edge computing component.

### Brief Description of the Drawings

Fig. 1 shows an exemplary network arrangement according to various exemplary embodiments.
Fig. 2 shows an exemplary user equipment (UE) according to various exemplary embodiments.
Fig. 3 shows an architecture for enabling edge applications according to various exemplary embodiments.
Fig. 4 shows a signaling diagram of an example signaling exchange between an application client and an edge enabler client (EEC).
Fig. 5 shows a method for storing information in an EEC knowledge database according to various exemplary embodiments.
Fig. 6 shows a method for intelligent EEC operation according to various exemplary embodiments.
Fig. 7 shows a signaling diagram for an edge application server (EAS) discovery procedure according to various exemplary embodiments.
Fig. 8 shows a table of EAS discovery filters according to various exemplary embodiments.

### Detailed Description

The exemplary embodiments may be further understood with reference to the following description and the related appended drawings, wherein like elements are provided with the same reference numerals. The exemplary embodiments relate to edge enabler client (EEC) operation and procedures for enabling edge applications (e.g., service provisioning, EEC registration, edge application server (EAS) discovery, etc.).

The exemplary embodiments are described with regard to a user equipment (UE). However, reference to a UE is provided for illustrative purposes. The exemplary embodiments may be utilized with any electronic component that may establish a connection to a network and is configured with the hardware, software, and/or firmware to exchange information and data with the network. Therefore, the UE as described herein is used to represent any electronic component.

The exemplary embodiments are also described with regard to a 5G New Radio (NR) network. However, reference to a 5G NR network is merely provided for illustrative purposes. The exemplary embodiments may be utilized with any network that implements the functionalities described herein for enabling edge applications.

The UE may access an edge data network via the 5G NR network. The edge data network may provide the UE with access to edge computing services. Those skilled in the art will understand that edge computing refers to performing computing and data processing at the network where the data is generated. In contrast to legacy approaches that utilize a centralized architecture, edge computing is a distributed approach where data processing is localized towards the network edge, closer to the end user. This allows performance to be optimized and latency to be minimized.

Application data may flow between an application client running on the UE and an edge application server (EAS) of the edge data network. The UE may be equipped with one or more EECs, each configured to provide support to one or more application clients. For example, an EEC may perform various operations related to procedures such as, but not limited to, service provisioning, EEC registration and EAS discovery. Thus, each EEC may be configured to handle a wide array of different parameters and perform various different operations in support of one or more applications installed on the UE.

The exemplary embodiments introduce improvements for EEC operation. The exemplary embodiments may allow an EEC to make decisions based on knowledge accumulated in the past, learn from experience and share its experience with other EECs. Some of the exemplary embodiments are described with regard to a database that is used for storing information related to EEC deployment experience. The database may be stored locally at the UE, at a remote location to the UE and/or distributed across various devices. Thus, information collected by an EEC running on one UE may be used (directly or indirectly) by an EEC running on a different UE. Some of the exemplary techniques described herein relate to creating, maintaining and utilizing this exemplary database. Throughout this description, this exemplary database may be referred to as an "EEC knowledge database." However, reference to the term EEC knowledge database is merely provided for illustrative purposes, different entities may refer to a similar concept by a different name.

As will be described in more detail below, an EEC may be responsible for a variety of different procedures. Some of the exemplary embodiments relate to utilizing information stored in the EEC knowledge database and/or information gathered from other UE internal functions to improve EEC operation. For example, the information stored in the EEC knowledge database may be analyzed to determine which EAS the EEC should select for service when there are multiple EASs available. In another example, information stored in the EEC knowledge database may be analyzed to determine whether parameter values received from an application client should be adopted as is or modified prior to being included in a request that is to be sent to the network by the EEC. Specific examples related to utilizing information stored in the EEC knowledge database and/or information gathered from other UE internal functions to improve EEC operation are provided in detail below.

In addition, the exemplary embodiments relate to EAS discovery procedure signaling. It has been identified that it may be beneficial for the EEC to provide application specific information to the edge enabler server (EES) during EAS discovery. The exemplary embodiments introduce signaling techniques that enable the EEC to provide this type of information to the EES where it may then be used by the EES to select an EAS for the EEC. Specific examples of these EAS discovery procedure signaling techniques are provided in detail below.

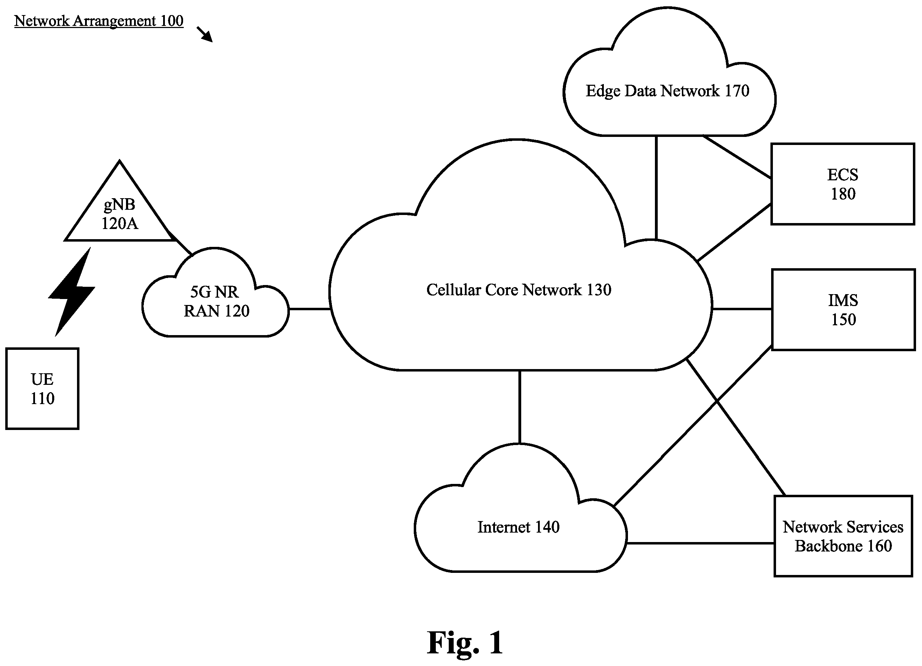

Fig. 1 shows an exemplary network arrangement 100 according to various exemplary embodiments. The exemplary network arrangement 100 includes a UE 110. Those skilled in the art will understand that the UE 110 may be any type of electronic component that is configured to communicate via a network, e.g., mobile phones, tablet computers, desktop computers, smartphones, phablets, embedded devices, wearables, Internet of Things (IoT) devices, etc. It should also be understood that an actual network arrangement may include any number of UEs being used by any number of users. Thus, the example of a single UE 110 is merely provided for illustrative purposes.

The UE 110 may be configured to communicate with one or more networks. In the example of the network configuration 100, the network with which the UE 110 may wirelessly communicate is a 5G NR radio access network (RAN) 120. However, the UE 110 may also communicate with other types of networks (e.g., 5G cloud RAN, a next generation RAN (NG-RAN), a long term evolution (LTE) RAN, a legacy cellular network, a wireless local area network (WLAN), etc.) and the UE 110 may also communicate with networks over a wired connection. With regard to the exemplary embodiments, the UE 110 may establish a connection with the 5G NR RAN 120. Therefore, the UE 110 may have a 5G NR chipset to communicate with the NR RAN 120.

The 5G NR RAN 120 may be a portion of a cellular network that may be deployed by a network carrier. The 5G NR RAN 120 may include, for example, cells or base stations (Node Bs, eNodeBs, HeNBs, eNBS, gNBs, gNodeBs, macrocells, microcells, small cells, femtocells, etc.) that are configured to send and receive traffic from UEs that are equipped with the appropriate cellular chip set.

Those skilled in the art will understand that any association procedure may be performed for the UE 110 to connect to the 5G NR RAN 120. For example, as discussed above, the 5G NR RAN 120 may be associated with a particular cellular provider where the UE 110 and/or the user thereof has a contract and credential information (e.g., stored on a SIM card). Upon detecting the presence of the 5G NR RAN 120, the UE 110 may transmit the corresponding credential information to associate with the 5G NR RAN 120. More specifically, the UE 110 may associate with a specific base station (e.g., gNB 120A).

The network arrangement 100 also includes a cellular core network 130, the Internet 140, an IP Multimedia Subsystem (IMS) 150, and a network services backbone 160. The cellular core network 130 may refer to an interconnected set of components that manages the operation and traffic of the cellular network. It may include the evolved packet core (EPC) and/or the 5G core (5GC). The cellular core network 130 also manages the traffic that flows between the cellular network and the Internet 140. The IMS 150 may be generally described as an architecture for delivering multimedia services to the UE 110 using the IP protocol. The IMS 150 may communicate with the cellular core network 130 and the Internet 140 to provide the multimedia services to the UE 110. The network services backbone 160 is in communication either directly or indirectly with the Internet 140 and the cellular core network 130. The network services backbone 160 may be generally described as a set of components (e.g., servers, network storage arrangements, etc.) that implement a suite of services that may be used to extend the functionalities of the UE 110 in communication with the various networks.

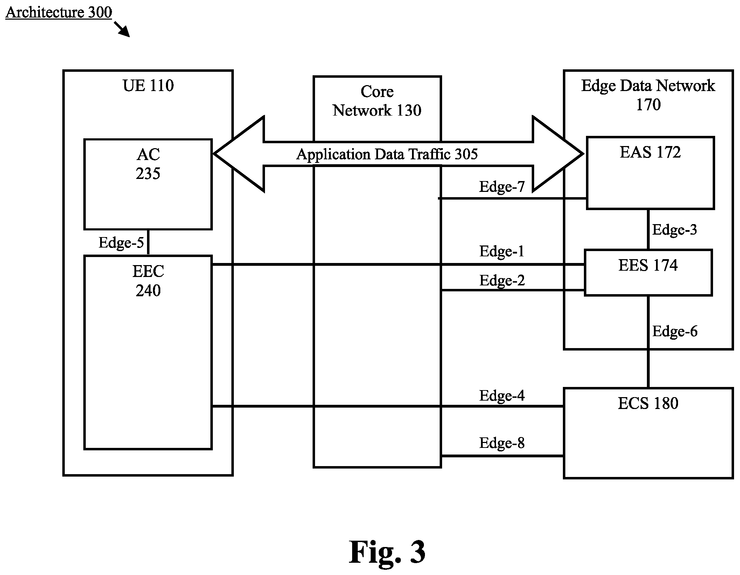

In addition, the network arrangement 100 includes an edge data network 170 and an edge configuration server (ECS) 180. The exemplary embodiments are described with regard to procedures related to enabling edge applications (e.g., service provisioning, EEC registration, EAS discovery, etc.). These procedures may include interactions between the UE 110, the edge data network 170 and the ECS 180. The edge data network 170 and the ECS 180 will be described in more detail below with regard to Fig. 3. Those skilled in the art will understand that an actual network arrangement may include any appropriate number of edge data networks and ECSs. Thus, the example of a single edge data network 170 and single ECS 180 is merely provided for illustrative purposes.

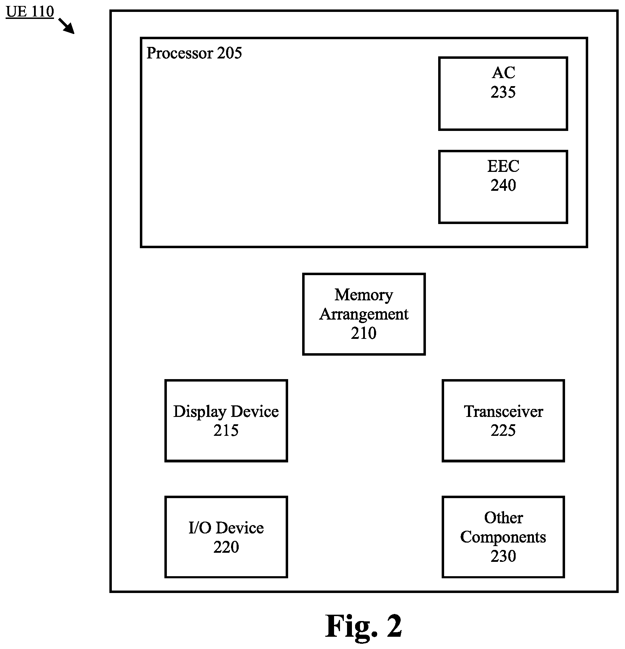

Fig. 2 shows an exemplary UE 110 according to various exemplary embodiments. The UE 110 will be described with regard to the network arrangement 100 of Fig. 1. The UE 110 may include a processor 205, a memory arrangement 210, a display device 215, an input/output (I/O) device 220, a transceiver 225 and other components 230. The other components 230 may include, for example, an audio input device, an audio output device, a power supply, a data acquisition device, ports to electrically connect the UE 110 to other electronic devices, etc.

The processor 205 may be configured to execute various types of software. For example, the processor may execute an application client (AC) 235 and an EEC 240. The AC 235 may perform operations related to an application installed on the UE 110 exchanging application data with a server via a network. The EEC 240 may perform operations in support of the AC 235. For example, the EEC 240 may perform operations related to procedures such as, but not limited to, service provisioning, EEC registration and EAS discovery. Reference to a single AC 235 and EEC 240 is merely provided for illustrative purposes. The UE 110 may be equipped with any appropriate number of application clients supported by an appropriate number of EECs. The AC 235 and the EEC 240 are discussed in more detail below with regard to Fig. 3.

The above referenced software being executed by the processor 205 is only exemplary. The functionality associated with the software may also be represented as a separate incorporated component of the UE 110 or may be a modular component coupled to the UE 110, e.g., an integrated circuit with or without firmware. For example, the integrated circuit may include input circuitry to receive signals and processing circuitry to process the signals and other information. The software may also be embodied as one application or separate applications. In addition, in some UEs, the functionality described for the processor 205 is split among two or more processors such as a baseband processor and an applications processor. The exemplary embodiments may be implemented in any of these or other configurations of a UE.

The memory arrangement 210 may be a hardware component configured to store data related to operations performed by the UE 110. The display device 215 may be a hardware component configured to show data to a user while the I/O device 220 may be a hardware component that enables the user to enter inputs. The display device 215 and the I/O device 220 may be separate components or integrated together such as a touchscreen. The transceiver 225 may be a hardware component configured to establish a connection with the 5G NR-RAN 120, an LTE-RAN (not pictured), a legacy RAN (not pictured), a WLAN (not pictured), etc. Accordingly, the transceiver 225 may operate on a variety of different frequencies or channels (e.g., set of consecutive frequencies).

Fig. 3 shows an architecture 300 for enabling edge applications according to various exemplary embodiments. The architecture 300 will be described with regard to the network arrangement 100 of Fig. 1 and the UE 110 of Fig. 2. The architecture 300 provides a general example of the type of components that may interact with one another when the UE 110 is configured to exchange application data traffic 305 with the edge data network 170. However, as indicated above, the exemplary embodiments are described with regard to procedures that may occur prior to establishing the flow of application data traffic 305.

The architecture 300 includes the UE 110, the core network 130 and the edge data network 170. The UE 110 may establish a connection to the edge data network 170 via the core network 130 and various other components (e.g., gNB 120A, the 5G NR RAN 120, network functions, etc.).

In the architecture 300, the various components are shown as being connected via reference points labeled edge-x (e.g., edge-1, edge-2, edge-3, edge-4, edge-5, edge-6, edge-7, edge-8, etc.). Those skilled in the art will understand that each of these reference points (e.g., connections, interfaces, etc.) are defined in the 3GPP Specifications. In addition to the exemplary techniques described herein, the exemplary architecture arrangement 300 may use these reference points in the manner in which they are defined in the 3GPP Specifications. Furthermore, while these interfaces are termed reference points throughout this description, it should be understood that these interfaces are not required to be direct wired or wireless connections, e.g., the interfaces may communicate via intervening hardware and/or software components. To provide an example, the UE 110 communicates over the air with the gNB 120A. However, in the architecture 300 the UE 110 is shown as having a connection to the ECS 180. This connection is not a direct communication link between the UE 110 and the ECS 180. Instead, this is a connection that is facilitated by intervening hardware and software components. Thus, throughout this description the terms "connection," "reference point" and "interface" may be used interchangeably to describe the interfaces between the various components in the architecture 300 and the network arrangement 100.

Once connected, application data traffic 305 may flow between the AC 235 running on the UE 110 and the EAS 172 of the edge data network 170. The EAS 172 may be accessed through the core network 130 via uplink classifiers (CL) and branching points (NP) or in any other appropriate manner.

The EEC 240 may be configured to provide supporting functions for the AC 235. For example, the EEC 240 may perform operations related to procedures such as, but not limited to, EAS discovery and the retrieval and provisioning of configuration information that may enable the exchange of the application data traffic 305 between the AC 235 and the EAS 172. Specific examples of EEC operation will be provided in detail below. To differentiate the EEC 240 from other EECs, the EEC 240 may be associated with a unique value (e.g., EEC ID) that identifies the EEC 240. Further, reference to a single AC 235 and EEC 240 is merely provided for illustrative purposes, the UE 110 may be equipped with any appropriate number of application clients and EECs.

The edge data network 170 may also include an edge enabler server (EES) 174. The EES 174 may be configured to provide supporting functions to the EAS 172 and the EEC 240 running on the UE 110. For example, the EES 174 may perform operations related to procedures such as, but not limited to, provisioning configuration to enable the exchange of the application data traffic 305 between the UE 110 and the EAS 172 and providing information related to the EAS 172 to the EEC 235 running on the UE 110. Those skilled in the art will understand the variety of different types of operations and configurations relevant to an EES. Further, reference to the edge data network 170 including a single EAS 172 and a single EES 174 is merely provided for illustrative purposes. In an actual deployment scenario, an edge data network may include any appropriate EASs and EESs interacting with any number of UEs.

The ECS 180 may be configured to provide supporting functions for the EEC 240 to connect the EES 174. For example, the ECS 180 may perform operations related to concepts such as, but not limited to, provisioning of edge configuration information to the EEC 240. The edge configuration information may include the information for the EEC 240 to connect to the EES 174 (e.g., service area information, etc.) and the information for establishing a connection with the EES 174 (e.g., uniform resource identifier (URI). Those skilled in the art will understand the variety of different types of operations and configurations relevant to an ECS.

In the network architecture 100 and the enabling architecture 300, the ECS 180 is shown as being outside of the edge data network 170 and the core network 130. However, this is merely provided for illustrative purposes. The ECS 180 may be deployed in any appropriate virtual and/or physical location (e.g., within the mobile network operator's domain or within a third-party domain) and implemented via any appropriate combination of hardware, software and/or firmware.

The EEC 240 may handle a variety of different parameters and may be responsible for various decisions. These parameters and decisions may be related to interactions with other components of the UE 110 (e.g., application clients, other EECs, etc.) and/or network side components. Prior to discussing the exemplary embodiments, a general overview of some example procedures that may be performed by an EEC 240 are provided below.

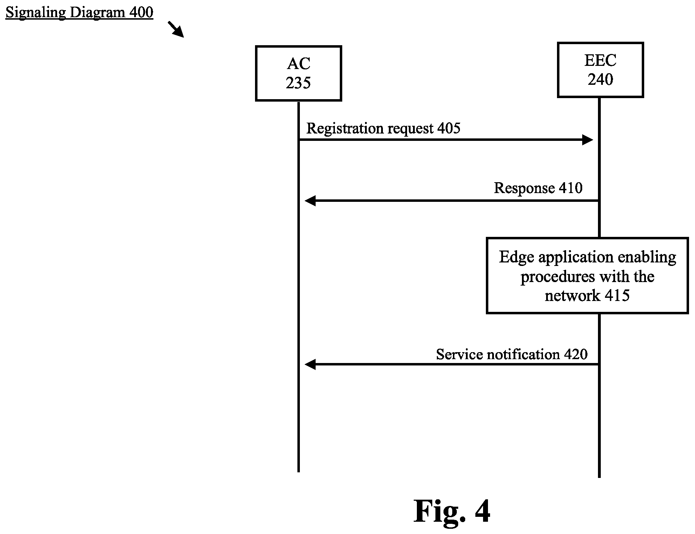

Fig. 4 shows a signaling diagram 400 of an example signaling exchange between the AC 235 and the EEC 240. The interactions between the AC 235 and the EEC 240 may occur via the EDGE-5 reference point or any other appropriate connection.

In 405, the AC 235 sends a registration request to the EEC 240 for edge computing services. This request may indicate to the EEC 240 that the AC 235 wants to access edge computing services. In addition, the AC 235 may provide other parameters that may be used by the EEC 240 to perform edge application enabling procedures with the network. In 410, the EEC 240 may send an edge service registration response to the AC 235. In this example, it is assumed that the response indicates that to the AC 235 that the EEC 240 is going to attempt to establish a connection to an edge data network for the AC 235. However, there may be scenarios in which the EEC 240 denies the request.

In 415, the EEC 240 may perform edge application enabling procedures with the network. For example, the EEC 240 may perform procedures such as, but not limited to, service provisioning, EEC registration and EAS discovery. Specific examples of these procedures are provided below. In 420, the EEC 240 sends an edge service notification to the AC 235. In this example, it is assumed that the response indicates that the connection to the EAS 172 is successful. However, there may be scenarios in which the EEC 240 is unable to establish a connection with an edge data network.

Returning to the network architecture 300, the EEC 240 may perform a service provisioning procedure with the ECS 180 via the EDGE-4 reference point or any other appropriate connection. For example, the EEC 240 may receive an address (e.g., uniform resource identifier (URI), etc.) for the ECS 180. The address may be preconfigured at the EEC 240, provided by the AC 235 and/or provided by any other appropriate UE 110 or network component. The EEC 240 may then send a provisioning request to the ECS 180. The request may include parameters such as, but not limited to, a UE identifier, credentials received during authorization procedures and application client profile information.

In response, the ECS 180 may determine that EES 174 is suitable for the parameters provided in the provisioning request. The ECS 180 may then send a provisioning response to the EEC 240 with edge computing configuration information such as, but not limited to, identification of the edge data network 170 and information for establishing a connection to the EES 174 (e.g., URI, IP address, etc.). The example service provisioning procedure described above is merely provided for illustrative purposes. The exemplary embodiments may apply to an EEC acquiring this type of information in any appropriate manner.

In an actual deployment scenario, there may be any appropriate number of ECSs. Thus, the EEC 240 may have a choice between multiple ECSs for the recipient of the service provisioning request. In some scenarios, an ECS may provide the EEC 240 with edge data network configuration information that, for any of a variety of different reasons, does not result in a successful connection with an edge data network. The UE 110 may then contact a different ECS (e.g., the ECS 180) in an attempt to establish to a connection to an edge data network for the AC 235.

The EEC 240 may register with the EES 174 via the EDGE-1 reference point or any other suitable connection. The EEC registration procedure may be performed to provide information to the EES 174 that may be used to enable edge computing services. Each EEC at the UE 110 may be registered with one or more EESs on behalf of one or more ACs simultaneously. Thus, in an actual deployment scenario, the EEC 240 may have a choice between multiple EESs as the recipient of the EEC registration request. In some networks, EEC registration may be optional. In other networks, EEC registration may be mandatory. The EEC 240 may receive configuration information indicating whether EEC registration is to be performed with a particular EES from an edge computer service provider (ECSP). The example EEC registration procedure described above is merely provided for illustrative purposes. The exemplary embodiments may apply to an EEC acquiring this type of information in any appropriate manner.

In addition, the EEC 240 may perform EAS discovery with the EES 174 via the EDGE-1 reference point or any other suitable connection. Those skilled in the art will understand that EAS discovery is a procedure where the UE 110 discovers an address of an appropriate EAS. Accordingly, in this example, the EEC 240 may send a discovery request to the EES 174. In response, the EES 174 may send a discovery response to the EEC 240 to provide information that explicitly or implicitly indicates an address for the EAS 172. In some scenarios, the discovery response may indicate the address for multiple EASs and it is up to the EEC 240 and/or the AC 235 to select one of the EASs.

An EEC may handle a variety of different parameters and perform a variety of different procedures. For instance, the EEC 240 may include a variety of different parameters in messages sent to the network (e.g., service provisioning request, EEC registration request, EAS discovery request, etc.). Some of the parameters may be related to the AC 235 and its requirements (e.g., AC profile information element (IE), AC service key performance indicator (KPI) IEs, etc.) and some of the parameters may be related to the EAS that is to be discovered (e.g., desired EAS characteristics, etc.). The information for these parameters may be provided to and/or derived by the EEC 240. This type of information may be provided by an AC (e.g., signaling diagram 400, etc.), preconfigured at the EEC 240 or received from any other appropriate source.

While the exemplary embodiments may provide benefits to the example procedures referenced above, the exemplary embodiments may be used to improve any appropriate aspect of EEC performance and/or any appropriate aspect of procedures related to edge computing that may be performed by the UE 110. Those skilled in the art will understand that the above example procedures (e.g., service provisioning, EEC registration, EAS discovery, etc.) are not required to be performed by an EEC nor are the example procedures the only procedures that may be performed by the EEC. The exemplary embodiments are not limited to any particular type of procedure or parameter related to edge computing services.

Some of the exemplary embodiments are described with regard to utilizing information that may be available from other internal mechanisms of the UE 110 that are collecting information and/or making predictions about UE or network behavior. To provide some examples of this type of information, UE location information, a predicted UE mobility path and a predicted time at which the user may utilize a particular application may also be used to improve EEC operation and/or the performance of procedures related to edge computing.

It has been identified that information provided to the EEC 240 may not be reliable. To provide an example, consider a scenario in which the UE 110 is currently running a navigation application providing directions to a destination and also executing software in the background configured to predict UE mobility. The UE 110 location information retrieved from the navigation application may not be consistent with the predicted UE mobility information. Thus, information received from different sources may be inconsistent with one another. In addition, the parameters available to the EEC 240 may be subject to errors. For example, the UE 110 may deviate from a predicted path or information provided by the AC 235 such as KPI or quality of service (QoS) values may include a safety margin and not accurately reflect the actual requirements of the corresponding application.

Under conventional circumstances, various aspects of EEC operation are up to EEC implementation. For example, it may be up to the EEC to decide which parameters are to be included or omitted from a particular message. In another example, it may be up to the EEC to decide whether a parameter value received from another source is to be utilized as is or modified in some manner. The variety and volume of decisions that are to be performed by an EEC combined with the variety and volume of information available to the EEC to make those decisions cause EEC operation to have a high complexity.

As indicated above, some of the exemplary embodiments relate to utilizing information stored in an EEC knowledge database and/or information gathered from other UE internal functions to improve EEC operation. The EEC knowledge database may be used to improve EEC performance and/or the performance of procedures related to enabling edge applications. The EEC knowledge database may be a local database, a remote database (e.g., a cloud implementation, etc.), a local copy of a remote database, a local copy of a portion of a remote database, part of a distributed database, any combination thereof or any other appropriate implementation of a database.

In some embodiments, EECs running on different UEs may be configured to share information that is to be stored in an EEC knowledge database directly using peer-to-peer (P2P) communication or indirectly via a remote server in the cloud or a server used for edge computing services. Therefore, the EEC knowledge database described herein may deployed in any appropriate virtual and/or physical location (e.g., within the mobile network operator's domain or within a third-party domain) and implemented via any appropriate combination of hardware, software and/or firmware.

The EEC knowledge database may enable EECs to make decisions based on information accumulated from past EEC deployment experiences. The information may have been accumulated by the EEC itself, other EECs running on the same UE and/or EECs running on other UEs. The information stored in the EEC knowledge database may be input into a trained model or a machine learning algorithm to provide insight into operations that may improve future EEC performance.

To characterize UE 110 and/or network behavior relative to procedures for enabling edge applications, the EEC knowledge database may store information such as, but not limited to, application requirements, UE position information, predicted UE mobility information, network environment information (e.g., quality of wireless channel, current load in the cell, network slice information and quality of service (QoS) available in the current cell. The application requirements may be received by the EEC knowledge database directly or indirectly from application clients. The location information may be received by the EEC knowledge database directly or indirectly from a navigation application, software that predicts UE mobility or location relative to a day or time and a global navigation satellite system (GNSS) module. The network environment information may be received by the EEC knowledge database directly or indirectly from a baseband processor (e.g., cellular modem, etc.).

The EEC knowledge database may contain a mapping function which maps inputs (e.g., QoS, time of the day, cell ID, location, AC ID, etc.) to endpoints (e.g., IP address of EAS, full qualified domain name (FQDN), etc.). If the variability of the EAS endpoint for a particular combination of inputs is low, UEs may be confident that the EAS endpoint given by the mapping is likely to be an EAS that will provide adequate service. In some embodiments, a confidence value may be provided as output of a machine learning procedure (e.g., Bayesian, etc.) on the contents of the EEC knowledge database.

In addition, metrics evaluating the performance of a particular EAS can allow other EECs to choose the optimal EAS. To provide an example, the EEC knowledge database may indicate to the EEC 240 that in the past at a current location or on a predicted route, a particular edge data network (e.g., edge data network 170) was able to provide adequate edge computing services to a particular AC (e.g., AC 235). The EEC knowledge database may also indicate a time and/or day at which this edge data network provided the edge computing services and the characteristics of the UE 110 network environment when this edge data network provided the edge computing services.

The information stored in the EEC knowledge database may be input into a trained model or a machine learning algorithm to determine things such as, but not limited to, which edge data network is most likely to provide adequate edge computing services for a particular AC under certain conditions, which procedures are to be performed to discover an EAS or which procedure may be omitted under certain conditions, which ECS to select under certain conditions, which EES to select under certain conditions, which IEs and parameters are to be included in the message to the ECS and EESs under certain conditions and which EAS to select if more than one EAS is provided during EAS discovery. In some embodiments, EAS selection may be performed by the AC. In this type of scenario, the EEC may filter the EASs received during EAS discovery based on the results of the trained model or algorithm to provide an EAS address to the AC that is likely to provide adequate edge computing services.

The machine learning performed on the contents of the EEC knowledge database may be done locally at the UE 110. In some examples, the machine learning may be done in a federated manner where individual EECs store their information on a remote database (e.g., cloud implementation, edge server, etc.). The remote server may combine the information from EECs installed on different UEs and distribute it to EECs that may take advantage of the information acquired by EECs installed on other devices. Specific examples of creating, maintaining and utilizing the EEC knowledge database are provided in detail below.

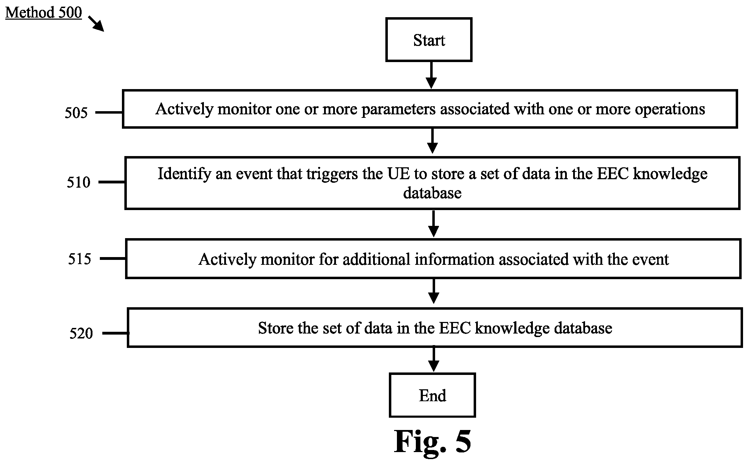

Fig. 5 shows a method 500 for storing information in an EEC knowledge database according to various exemplary embodiments. As indicated above, the EEC knowledge database may be implemented in a variety of different ways. The method 500 provides examples of the EEC 240 collecting and storing information in an EEC knowledge database. In some examples, the EEC knowledge database is described as being stored locally at the UE 110. In other examples, the EEC knowledge database is described as being stored in a remote location from the UE 110. However, any reference to the EEC knowledge database being implemented in a particular manner is merely provided for illustrative purposes. The exemplary embodiments may apply to a local EEC knowledge database, a remote EEC knowledge database, a distributed EEC knowledge database or any other appropriate implementation of a database.

In addition, those skilled in the art will understand that the EEC knowledge database may contain information collected exclusively by a single EEC of the UE 110, collected by multiple EECs of the UE 110 or collected by all of the EECs of the UE 110. Further, regardless of how the EEC knowledge database is implemented, the EEC knowledge database may also contain information collected by one or more EECs running on one or more UEs. The exemplary embodiments may apply to an EEC knowledge database that is used by any appropriate number of EECs running on one or more UEs to store information.

In 505, the UE 110 actively monitors one or more parameters associated with one or more operations. For example, the EEC 240 may be configured to track parameters associated with procedures related to enabling an edge application. In addition, the UE 110 may also track parameters related to the UE 110 deployment (e.g., location, network information), UE 110 behavior and/or network behavior relative to the time when a particular operation is performed or expected to be performed.

In 510, the UE 110 identifies an event that triggers the UE 110 to store a set of data to be stored in the EEC knowledge database. For example, the UE 110 may identify that a particular application was launched that is likely to utilize edge computing services or may identify that the EEC 240 has received a registration request from the AC 235. The exemplary embodiments are not limited to these examples and may utilize any appropriate type of event or condition to trigger the collection and/or storage of information in the EEC knowledge database.

In 515, the UE 110 actively monitors for additional information associated with the event. Generally, the additional information may include an indication of whether an operation or procedure was successful. For example, the additional information may include an indication of how the UE 110, one or more edge computing components (e.g., ECS, EES, EAS, etc.) and/or an edge data network behaved after an operation or a procedure for enabling edge application was initiated.

In 520, the UE 110 stores the set of data in the EEC knowledge database. As indicated above, the EEC knowledge database may be implemented in any of a variety of different ways. Thus, storing the set of data in the EEC knowledge database may include operations such as, but not limited to, storing the set of data locally at the UE 110, sending the set of data to a remote server and sending the set of data to another UE. In addition, the UE 110 may store the set of data in multiple different EEC knowledge databases (e.g., a local EEC knowledge database and a remote EEC knowledge database, etc.).

In some embodiments, the storing operation may be performed at different times. To provide one general example, the EEC 240 may store a first portion of the set of data in a local EEC knowledge database after identifying the event in 510 and prior to or during the monitoring operation performed in 515. Subsequently, the EEC 240 may store a second portion of the set of data such as an indication as to whether the procedure associated with the event identified in 510 was successful. Over time, zero or more additional portions of information may be stored in the EEC knowledge database as part of the set of data. The examples described above are specific to a single set of data. However, during operation, multiple instances of the method 500 may be performed simultaneously, each for a different set of data.

In one example, the EEC 240 may be configured to store sets of data corresponding to service provisioning in the EEC knowledge database. Thus, the event in 510 may be an operation or parameter associated with service provisioning. The set of data may include a time parameter indicating when a provisioning request was sent by the EEC 240, a location parameter indicating a location of the UE 110 and an edge computing component parameter identifying a network component (e.g., ECS) that is the intended recipient of the request. In addition, the EEC 240 may also record an identity of the one or more ACs that directly or indirectly triggered the service provisioning procedure and any other appropriate type of information that may be directly or indirectly associated with UE 110 deployment, UE 110 behavior and/or network behavior.

The EEC 240 may then actively monitor for additional information associated with the service provisioning procedure and/or the procedures performed after the service provisioning procedure. For example, if the service provisioning procedure is not successful, the EEC 240 may store an indication of failure such as, but not limited to, an error code or a cause code. If the service provisioning procedure is successful, the EEC 240 may store an indication of success, an identity of an edge data network or EAS that subsequently provided edge computing services, a time parameter indicating a duration that the connection to the edge data network was maintained and/or any other appropriate type of information.

In another example, the EEC 240 may be configured to record information corresponding to EEC registration in the EEC knowledge database. In some embodiments, this information may be added to a set of data in accordance with monitoring for additional data in 515. In other embodiments, the event in 510 may be an operation or parameter associated with EEC registration. This information may include a time parameter indicating when a registration request was sent by the EEC 240, a location parameter indicating a location of the UE 110 and an edge computing component parameter indicating a network component (e.g., EES) that is the intended recipient of the registration request. In addition, the EEC 240 may also record an identity of the one or more ACs that directly or indirectly triggered the registration procedure and any other appropriate type of information that may be directly or indirectly associated with UE 110 deployment, UE 110 behavior and/or network behavior.

The EEC 240 may actively monitor for additional information associated with EEC registration and/or procedures performed after EEC registration. For example, if EEC registration is not successful, the EEC 240 may store an indication of failure such as, but not limited to, an error cause or a cause code. If the EEC registration is successful, the EEC 240 may store a time parameter indicating a duration during which the resulting EEC context was maintained and/or any other appropriate type of information.

In a further example, the EEC 240 may be configured to record information corresponding to EAS discovery in the EEC knowledge database. In some embodiments, this information may be added to a set of data in accordance with monitoring for additional data in 515. In other embodiments, the event in 510 may be an operation or parameter associated with EAS discovery. This type of information may include a time parameter indicating when an EAS discovery request was sent by the EEC 240, a location parameter indicating a location of the UE 110 and an edge computing component parameter indicating a network component (e.g., EAS, EES, etc.) that is the intended recipient of the request. In addition, the EEC 240 may also record an identity of the one or more ACs that directly or indirectly triggered the discovery procedure and/or any other appropriate type of information.

The EEC 240 may actively monitor for additional information associated with EAS discovery and/or enabling edge application. For example, if EAS discovery is not successful, the EEC 240 may store an indication of failure, as an error cause and/or any other appropriate type of indication. If EAS discovery request is successful, the EEC 240 may store a time parameter indicating a duration of the resulting EAS connection, an EAS ID, an EAS endpoint, an EAS profile and any other appropriate type of information that may be directly or indirectly associated with UE 110 deployment, UE 110 behavior and/or network behavior.

In some examples, the outcome of EAS discovery may also be recorded in an AC-centric manner. For instance, after a connection is established to an EAS of edge data network, the EEC 240 may record (at various instances) additional information to track the experience of a particular AC with the edge data network. Thus, the EEC 240 may store a set of data for an AC ID including, but not limited to, a time stamp, a location, an indication as to whether edge services are working in the expected manner, an edge data network ID, an EES ID, an ECSP and/or an EAS ID. In addition, a grade may be derived to quantify a quality of service associated with an EAS and/or edge data network from the perspective of the EEC 240. In this example, the grade may be described on a numeric scale from 1 to 10. However, this is merely provided for illustrative purposes. Any appropriate metric may be used to indicate the performance of an EAS and/or edge data network.

The grade may be based on feedback collected by the EEC 240 and other UE 110 components. For example, the EEC 240 may monitor the edge data network performance based on measurements such as, but not limited to, round trip time (RTT) between the EEC and the EES, RTT between the EEC and the EAS, processing time at the EES and/or processing time at the EAS. In another example, the EEC 240 (or any other appropriate entity) may monitor the timing of the application data traffic to estimate response times of the EAS (including latencies). In a further example, the EEC 240 may receive implicit and/or explicit feedback from an AC (e.g., an indication of a request for EAS reselection, an indication of whether an EAS service KPI is satisfied, etc.). In another example, the user may provide direct feedback of the experience (e.g., user input indicating a satisfactory or non-satisfactory experience, etc.).

From the perspective of the EEC 240, edge data network performance may be affected by other users using the same EAS or using a different EAS that shares resources with EAS being utilized by the EEC 240. In addition, the radio conditions (e.g., UE position within a cell), cell load (e.g., presence of other users) and QoS for a dedicated data flow may affect edge data network performance. These types of parameters may also be stored in the EEC knowledge database.

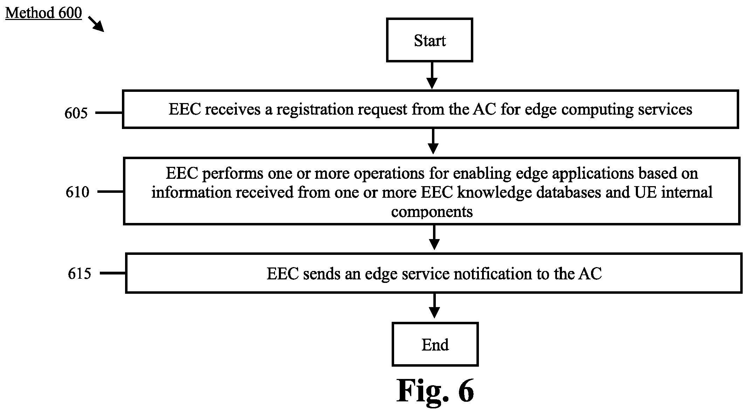

Fig. 6 shows a method 600 for intelligent EEC operation according to various exemplary embodiments. The method 600 will be described from the perspective of the EEC 240 of the UE 110 and provide several examples of how the EEC knowledge database may be used to improve EEC performance and/or the performance of procedures related to edge computing. However, as described in the various examples provide above, the EEC knowledge database may be implemented and utilized in a variety of different ways.

To implement the method 600, the EEC 240 may be equipped with (or have access to) an intelligent decision algorithm. The intelligent decision algorithm may process information such as, but not limited to, information collected from UE 110 internal components that provide an indication of UE 110 location, predicted mobility, QoS requirements, traffic load, wireless channel conditions, network slice information, frequency band information, application requirements, information stored in an EEC knowledge dataset, information learned from an EEC knowledge database, etc. As will be described in more detail below, this may improve EEC performance by enabling the EEC 240 to include parameter combinations and values in a request that have a high likelihood of being successful and skip certain signaling steps.

In 605, the EEC 240 receives a registration request from the AC 235 for edge computing services. The registration request may indicate to the EEC 240 that the AC 235 wants to utilize edge computing services. This may trigger the EEC 240 to perform one or more procedures (e.g., service provisioning, EEC registration, EAS discovery) related to enabling edge applications.

In 610, the EEC 240 performs one or more operations for enabling edge applications based on information received from one or more EEC knowledge databases and UE 110 internal components. For example, information learned from an EEC knowledge database may be used by the EEC 240 to identify which parameter combinations have been successful in the past under similar conditions and use these parameter combinations now because they are likely to be successful. In other examples, the EEC 240 may initially transmit a request using a parameter combination derived in a conventional manner. If the request is unsuccessful, the EEC 240 may modify the parameters in accordance with information learned from the EEC knowledge database and re-attempt the request with the modified parameters. Thus, the EEC 240 may use information learned from the EEC knowledge database to identify which parameter combinations are likely to be successful under the current conditions.

In addition to determining which parameters should be included, the information learned from the EEC knowledge database may enable the EEC 240 to determine which parameter values to use. This may allow the EEC 240 to avoid scenarios where the EEC has to choose between inconsistent or unreliable information received from different UE 110 internal components or where the EEC has to decide whether a parameter value received from the AC should be adopted as received or should be modified or even omitted.

The EEC 240 may also decide that certain signaling steps (e.g., service provisioning, registration and/or discovery) may be omitted. Instead, using information learned from the EEC knowledge database, the EEC 240 may select an ECS, EES, EAS and/or edge data network without performing certain signaling steps because the EEC 240 is already aware of endpoints which are likely to provide adequate service under the current conditions (e.g., time of day, UE location, AC ID, etc.). It may be beneficial to omit certain signaling steps because it may reduce delays associated with connecting to a suitable EAS, save battery power of the UE 110 and reduce the signaling load on the network.

As mentioned above, the EEC knowledge database may also be used to store AC-centric information. For example, the EEC knowledge database may store information related to which edge data networks were able to provide edge services to the AC 235. In addition, the UE 110 location, the time, the day and network characteristics may be also stored. This type of information may be used to learn which edge data network is likely to provide the required edge service for the AC 235 under these conditions, which procedures are necessary to discover an EAS (or which procedures may be skipped) for the AC 235 under these conditions, which ECSs and EESs to select, which IEs and parameters should be included in the signaling procedures towards the ECS or EES, which EAS to select when the EES provides more than one EAS during EAS discovery.

In some embodiments, the EEC 240 may support more than one AC simultaneously with one signaling procedure. To enable this, the EEC 240 may include AC profile information elements (IEs) for different ACs in a single service provisioning request or EAS discovery request. Thus, if the EEC knowledge database learns that at a certain location ECSP "A" typically provides services for AC 235, the EEC 240 may use this information when a different AC on the UE 110 also asks for ECSP "A" by skipping the service provisioning procedure because the EEC 240 is already aware that at this location ECSP "A" provides edge computing services. Further, the EEC 240 may also use this information to assess whether under these conditions the ECSP "A" is likely to meet the needs of the AC.

When an EEC knowledge database is stored locally at the UE 110, the UE 110 may utilize machine learning or any other type of analysis to learn which parameter combinations should be used under certain conditions or learn which signaling steps may be skipped under certain conditions. When the EEC knowledge database is stored at a remote location, a remote server may utilize machine learning or any other type of analysis to learn from the EEC knowledge database. The learned information may be distributed to other UEs. Alternatively, the remote EEC knowledge database may send raw data to the UE 110 where it is then analyzed.

In some embodiments, the distribution of information learned from analyzing the remote EEC knowledge database may include a filtering operation to ensure that an EEC only receives information likely to be relevant to the EEC's deployment conditions. For example, determining which EECs are to receive a set of learned information may be based on an EEC's current geographical location or whether the EEC has previously provided related information to the remote EEC knowledge database (e.g., a same or similar AC, similar EAS characteristics, similar EEs characteristics, similar location, etc.). The exemplary embodiments are not limited to these examples and may utilize any appropriate type of criteria to determine which EECs are to receive which sets of learned information

In some embodiments, the information stored in a local EEC knowledge database and/or information learned based on analyzing a local EEC knowledge database may be exchanged directly between EECs running on different devices via P2P communication links. Information exchanged via a server or via a P2P link may also be used to inform other EECs about a temporarily bad performance of an edge data network or an EAS. For example, the EEC 240 may collect information indicating that a particular edge data network or EAS is providing poor service under certain conditions. The UE 110 may then exchange this information with another device via a P2P communication link. Thus, in some scenarios, the EEC 240 may receive information about the dynamic load of an EAS in near-real time from EECs running on other UEs and take this into account when selecting an EAS.

In 615, the EEC 240 sends an edge service notification to the AC 235. The edge service notification may indicate to the AC 235 that a connection to an edge data network and/or EAS is successful.

Utilizing the above exemplary techniques and mechanisms, the EEC 240 may be able to make decisions based on knowledge accumulated in the past, learn from actual deployment experience and share what it has learned with other devices. This should reduce EEC complexity and provide various performance benefits to the UE 110 and/or the edge computing applications. For instances, decision making by the EEC 240 for the AC 235 may be improved based on experience of other ACs with regard to the availability of edge data networks and EAS performance and experience from other devices (e.g., EECs running on other UEs).

The EEC knowledge database may also be utilized to store information about the service areas of EASs. Those skilled in the art will understand that the geographical location of the UE 110 is an important consideration when finding a suitable EAS for the UE 110 due to latency. As a result, the EAS may have a defined service area (e.g., a set of cells or tracking areas).

During operation, the UE 110 may receive a lifetime parameter indicating a duration of time it may be assumed that the information received from the network remains valid. For example, the lifetime parameter may be associated with edge data network configuration information received from an ECS or EAS profiles received from an EES. This lifetime parameter may be applicable to an EAS service area. Accordingly, it has been identified that this lifetime parameter may be used to skip certain signaling procedures when the UE 110 is deployed in the service area of an EAS.

In some embodiments, the EAS service area lifetime parameter may allow the UE 110 to skip certain procedures related to enabling edge applications, e.g., service provisioning, EEC registration and EAS discovery. For example, consider a scenario in which a user travels from location "A" to location "B" in the morning and then returns to location "A" in the evening. The EAS service area for location "A" may have a lifetime parameter for its edge data network configuration information or an EAS profile (e.g., EAS identity, EAS endpoint information) that is set to duration "N." The UE 110 may receive edge computing services using EAS endpoint information "A1" when deployed at location "A." The user may then travel to location "B" and return to location "A" at a later time. When the user returns to location "A" prior to the expiration of the duration "N," it may be unnecessary to repeat procedures related to enabling edge applications because the lifetime parameter indicates that the edge configuration information and/or EAS profile information is still valid for this EAS service area. Instead, the EEC 240 may attempt to directly reuse the EAS endpoint information "A1" because the lifetime duration "N" has not expired.

In addition, the EEC 240 may attempt to use the edge data network configuration information or EAS profiles beyond the time duration indicated by the lifetime parameter. Continuing with the example provided above, when the UE 110 is deployed at location "B," EEC 240 may receive an indication that the UE 110 is predicted to move to location "A" from location "B" at a certain time. The EEC knowledge database may indicate that the edge data network configuration information or EAS profile information for location "A" (e.g., EAS endpoint information "A1") has been the same a predetermined number of times. Thus, even after the duration of the lifetime parameter associated with location "A" has expired, the UE 110 may utilize stored edge data network configuration information or EAS profile information for location "A" (e.g., EAS endpoint information "A1") because it has been learned that the edge data network configuration information or EAS profile information for location "A" is likely to be the same when the UE 110 moves to location "A." In addition, it may be learned that the edge data network configuration information or EAS profile for a EAS service area is specific to a day and/or time. For example, it may be learned that on certain days the EAS endpoint information "A1" is likely to be used and on other days the EAS endpoint information "A2" is likely to be utilized. In another example it may be learned that at a certain time of day the EAS endpoint information "A1" is likely to be used and at another time of the same day the EAS endpoint information "A2" is likely to be utilized.

The UE 110 may continue to omit certain procedures within an EAS service area or a particular geographical area until the EEC 240 is unable to establish a connection to an EAS using the information of the EEC knowledge database or the performance provided by the EAS is unsatisfactory. The experience of skipping certain signaling procedures may also be stored in the EEC knowledge database or exchanged directly between EECs on different devices.

When the UE 110 is moving through the network, at some point, the UE 110 may switch to a different EAS. For example, the UE 110 may leave one EAS service area and enter a different one. In some scenarios, it may be beneficial to transfer application context that was created by one EAS for the AC 235 to a new EAS (e.g., target EAS). This type of procedures may be referred to as application context relocation (ACR). There are several variants of ACR, in some of them the EEC may be involved in the selection of the target EAS. In others, the selection of the target EAS is done by the edge data network. The EEC 240 may use predicted mobility information and learned knowledge about EAS service areas acquired in the past to anticipate that resources may be needed to perform ACR and reserve those resources ahead of time to avoid service interruptions.

In addition, the exemplary embodiments introduce mechanisms to enable the use of application specific information for EAS discovery. It has been identified that it may be beneficial for the UE 110 to provide application specific information such as, *a priori,* location information of other devices in a session with the UE 110 to an EES for EAS discovery. The application information may be used by the EES to select an EAS for the UE 110. The following exemplary embodiments are described with regard to a real-time multi-player gaming session. However, the exemplary embodiments are not limited to this type of session and may apply to any type of session between multiple UEs that is facilitated by an edge data network.

The criteria for selection of an EAS may be based on the application protocol. For example, the application protocol may be configured to prefer an EAS that is deployed at a location such that the EAS is likely to provide the same or similar latency to all devices of the session. In another example, the application protocol may prefer an EAS that is likely to provide the lowest latency for one or more users of the session. In another example, a certain instance of an EAS may be able to support only a certain limited number of UEs per multi-player session. In some scenarios, different EAS instances may support different limits and the application protocol may prefer an EAS that is able to support the number of users of the session. The exemplary embodiments are not limited to the example criteria described above and may be utilized with any appropriate EAS selection criteria.

The exemplary embodiments introduce an EAS discovery filter. Those skilled in the art will understand that the EEC may provide EAS discovery filters to an EES to assist the EES in determining the EAS of interest to the EEC. The exemplary EAS discovery filter described below may be used to provide application specific information to assist the EES during EAS discovery.

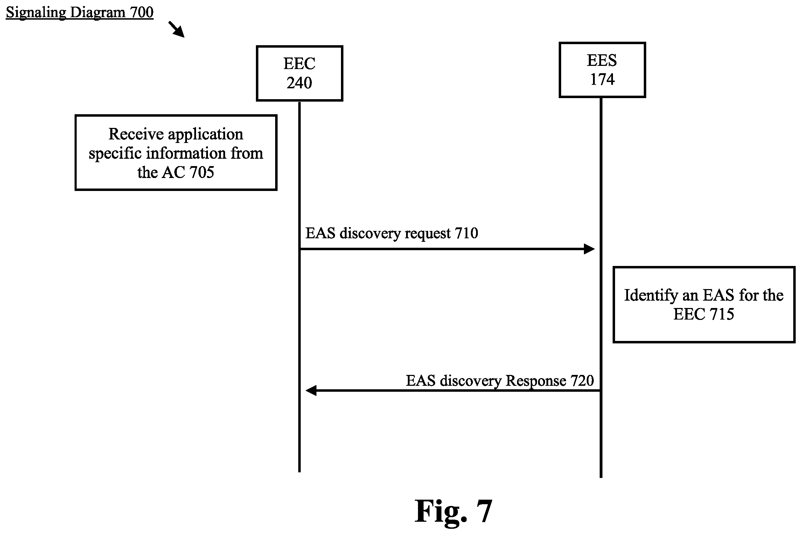

Fig. 7 shows a signaling diagram 700 for an EAS discovery procedure according to various exemplary embodiments. The signaling diagram 700 includes the EEC 240 and the EES 174.

Initially, consider a scenario in which a group of users each have their own UE equipped with a multi-playing gaming application. The users then agree via their applications to participate in a multi-player session. For example, the user of the UE 110 may launch their application and join a staging area (e.g., lobby, etc.) where players may gather prior to actually playing the game. In the staging area the users may explicitly or implicitly agree to participate in a multi-player gaming session. However, reference to a staging area or lobby is merely provided for illustrative purposes. The exemplary embodiments may utilize any appropriate mechanism to exchange information between devices prior to the session.

In 705, the EEC 240 receives application specific information from the AC 235. In some embodiments, the application specific information may include location information associated with the other devices of the session. For example, the multi-player gaming application may utilize a remote server that facilitates the exchange of information between devices that are to participate in a session together.

In 710, the EEC 240 sends an EAS discovery request to the EES 174. The EAS discovery request may include parameters such as, but not limited to, an EEC ID, security credentials, UE 110 location information and desired EAS characteristics. In addition, the discovery request may include one or more EAS discovery filters.

In some embodiments, the EAS discovery procedure may be preceded by other procedures such as, but not limited to, service provisioning and EEC registration. The location information of the other users may also be provided during the service provisioning and/or EEC registration to ensure that each layer has the initial location information of the other devices to be involved in the session. In other embodiments, the UE 110 and/or the other users may utilize the exemplary EEC mechanisms described throughout this description to skip certain signaling steps. The exemplary EAS discovery techniques described with regard to the signaling diagram 700 may be used in conjunction with the other exemplary techniques described herein or independently from the other exemplary techniques.

As mentioned above, it may be beneficial to provide application specific information such as location information of other devices to be involved in a session with the UE 110 to the EES during EAS discovery procedure. Under conventional circumstances, the UE 110 does not provide location information associated with other users of the session to the EES and thus, it may not be considered during EAS discovery.

The exemplary embodiments introduce an EAS discovery filter IE that may be used to provide location information of other devices involved in a session. In addition, the EAS discovery filter may include EAS selection policy information. The EAS selection policy information may indicate the preferred EAS selection criteria for the application running on the UE 110. In other words, the EAS selection policy information may provide the EES with guidance as to how to select the EAS.

In one example, the EAS selection criteria information may indicate that it is preferred if all devices have a same or similar latency. This may be beneficial to real-time multi-player gaming sessions where differences in latency may cause an unfair competitive advantage. In another example, the EAS selection criteria information may indicate that it is preferred if the location of the EAS is selected such that the lowest latency is provided to the other devices in the session or a particular one or more devices in the session. This may be beneficial for remote surveillance where it may be preferred if an EAS is selected that is deployed close to remote surveillance system to assist with the evaluation of the surveillance data. However, as mentioned above, the exemplary embodiments are not limited to these types of use cases. The exemplary EAS discovery filter may be used to convey any appropriate type of EAS selection criteria.

In 715, the EES 174 identifies an EAS in response to the discovery request. For example, the EES 174 may utilize information such as, but not limited to, the location information provided in the exemplary discovery filter, the EAS selection criteria provided in the exemplary discovery filter and the UE 110 location information to select an EAS for the EEC 240.

The other devices involved in the session with the UE 110 also send similar information in an EAS discovery request to the EES of the same edge data network (e.g., EES 174, another EES of the edge data network 170, etc.). For example, a different UE that is to be involved in the same real-time multi-player gaming session may send its own location information to an EES and the exemplary EAS discovery filter comprising the location information of the UE 110 and application selection criteria. The one or more EESs that receive the EAS discovery filters from the UE 110 and the other devices to be involved in the session with the UE 110 may select the same EAS (e.g., EAS 174) for all of the devices.

In some embodiments, when the devices to be involved in the multi-player session utilize different EESs, it may be assumed that since each EES received the same location information of all of the devices to be involved in the session and the same EAS selection criteria, the same EAS may be selected by the different EESs without any communication between the different EESs. Thus, the exemplary EAS discovery filter may allow multiple EESs to select the same EAS without performing any operations to synchronize the operations of the EESs.

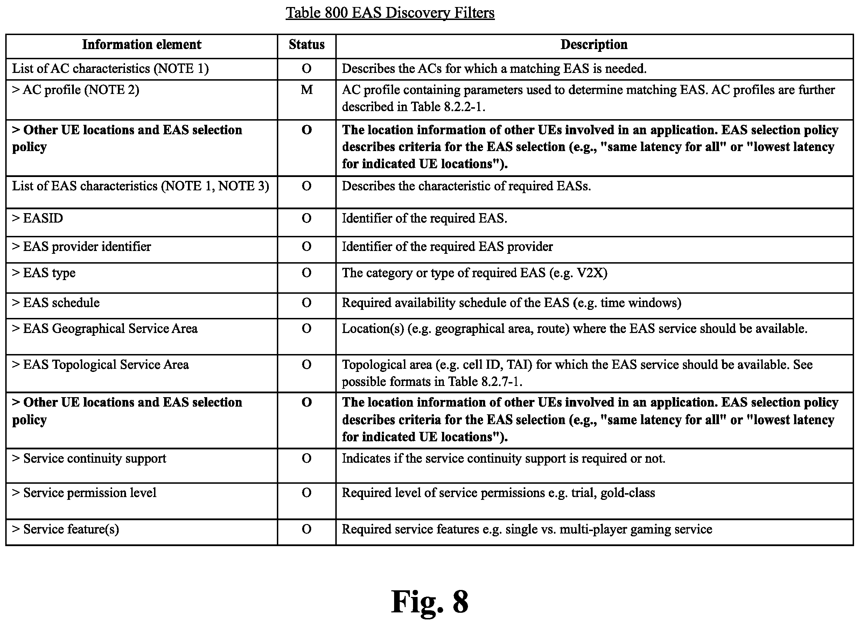

Fig. 8 shows a table 800 of EAS discovery filters. The table 800 shows the contents of table 8.5.3.2-2 of TS 23.558 modified to include a description of the exemplary EAS discovery filter described herein. Those skilled in the art will understand that a list of AC characteristics (e.g., the AC for which a matching EAS is needed) or a list of EAS characteristics (e.g., characteristics of a desired EAS) may be provided during EAS discovery. In the example table 800, the exemplary EAS discovery filter IE introduced above is referred to as "other UE locations and EAS selection policy" and may be optionally included during EAS discovery regardless of which list is being provided. Thus, the exemplary as "other UE locations and EAS selection policy" IE is shown twice, once for each list. It is noted that "other UE locations" may only be included if users have consented to share their individual UE location information with other users at the application level.

In 720, the EES 174 sends an EAS discovery response to the EEC 240. The discovery response may include information about the discovered EAS (e.g., EAS endpoint information for EAS 172, etc.) and information regarding capabilities that the EAS 172 may support (e.g., service permission levels, KPIs, etc.).

Subsequently, the EEC 240 and/or AC 235 may connect to the EAS 172 and join the session with the other devices. Since the other devices provided similar information during EAS discovery, each EES is providing EAS endpoint information for the same EAS (e.g., EAS 172). Thus, after the operations of the signaling diagram 700, the UE 110 and the other devices may participate in a session via the EAS.

In some exemplary embodiments, prior to the EAS discovery procedure (e.g., method 700), there may be another signaling procedure between the UE 110/AC 235/EEC 240 and the ECS 180. For example, to avoid privacy issues, the UE 110 may provide location information about itself and the other UEs in the form of an "Expected Group Geographical Service Area" IE that will be described in greater detail below.

This additional signaling procedure may include the EEC 240 initiating a request for service provisioning to the ECS 180. In this request, the EEC 240 may include the AC profile information elements (IEs), including the AC profile and an AC Group profile IEs. The AC group profile IE indicates the AC group profile of the multi-user session that the AC 235 wants to join. The AC group profile IE may include, for example, the "Expected Group Geographical Service Area" IE that indicates a small geographic circle around the center of mass of the UE/AC locations or around the location of a specific UE/AC for which certain service KPIs are to be optimized, or an area including the own UE location and the locations of one or more other UEs that want to join the multi-user session. The information included in the Expected Group Geographical Service Area IE may be application dependent. Using the center of mass of the UE locations or a larger area including these UE locations, there is no disclosure of individual UE locations, e.g., the exact location of the one or more other UEs is concealed. Thus, any potential privacy issues may be mitigated. In addition, this allows for a fallback position where it is still possible to take UE location information into account if the users do not consent to share their locations.

Based on the AC profile and the Group profile including the Expected group geographical service area and the other information provided by the EEC 240, the ECS 180 determines a suitable common EES (e.g., EES 174) and includes it in the service provisioning response. If more than one suitable EES is available, the ECS 180 may use additional information as input parameter(s) to determine a unique EES. The additional information may include, for example, the Group ID and an algorithm shared between the ECSs to derive the common EES from a list of available EESs. If the ECS 180 wants to provision the EECs with additional EESs, e.g., for service continuity, then the common EES is included as a first EES in the first entry of the list of EDN configuration information.

### Examples

In a first example, a user equipment (UE) performs a method comprising receiving a first request from an application client (AC) of the UE for access to an edge computing services, performing one or more operations for enabling edge applications, selecting one or more parameters to include in a second request to be sent to an edge computing component based on information learned from an edge enabler client (EEC) knowledge database and information collected from UE components and transmitting the second request to an edge computing component.

In a second example, the method of the first example, further comprising monitoring for one or more parameters associated with enabling edge applications, identifying an event, wherein the event triggers the UE to store a set of data in the EEC knowledge database, monitoring for additional information associated with the event and storing the set of data in the EEC knowledge database.

In a third example, the method of the first example, wherein the EEC knowledge database is deployed locally at the UE or at a remote location.

In a fourth example, the method of the first example, further comprising transmitting the set of data to an EEC running on a different device.

In a fifth example, the method of the second example, wherein the event is an operation associated with one of a service provisioning, EEC registration and edge application server (EAS) discovery.

In a sixth example, the method of the first example, wherein the information collected from the UE components comprises one or more of a predicted UE mobility, a current location and a current network conditions and application specific information.

In a seventh example, the method of the first example, wherein performing one or more operations for enabling edge applications comprises skipping a signaling step associated with enabling edge applications based on information learned from an EEC knowledge database and information collected from UE components.

In an eighth example, the method of the first example, further comprising receiving information from a remote EEC knowledge database or a device equipped with an EEC and selecting one or more parameters to include in the request based on the information received from the remote EEC knowledge database or the device equipped with an EEC.

In a ninth example, the method of the first example, further comprising receiving information from a remote EEC knowledge database or a device equipped with an EEC and omitting one or more signaling steps associated with enabling edge applications based on the information received from the remote EEC knowledge database or the device equipped with an EEC.

In a tenth example, the method of the first example, wherein the edge computing component is an edge configuration server (ECS) or an edge enabler server (EES).

Those skilled in the art will understand that the above-described exemplary embodiments may be implemented in any suitable software or hardware configuration or combination thereof. An exemplary hardware platform for implementing the exemplary embodiments may include, for example, an Intel x86 based platform with compatible operating system, a Windows OS, a Mac platform and MAC OS, a mobile device having an operating system such as iOS, Android, etc. The exemplary embodiments of the above described method may be embodied as a program containing lines of code stored on a non-transitory computer readable storage medium that, when compiled, may be executed on a processor or microprocessor.

Although this application described various embodiments each having different features in various combinations, those skilled in the art will understand that any of the features of one embodiment may be combined with the features of the other embodiments in any manner not specifically disclaimed or which is not functionally or logically inconsistent with the operation of the device or the stated functions of the disclosed embodiments.

As described above, one aspect of the present technology is the gathering and use of data available from specific and legitimate sources. The present disclosure contemplates that in some instances, this gathered data may include personal information data that uniquely identifies or can be used to identify a specific person. Such personal information data can include location data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, location data of other users (e.g., the application specific data) may be used to improve EAS discovery.

The present disclosure contemplates that those entities responsible for the collection, analysis, disclosure, transfer, storage, or other use of such personal information data will comply with well-established privacy policies and/or privacy practices.

In particular, such entities would be expected to implement and consistently apply privacy practices that are generally recognized as meeting or exceeding industry or governmental requirements for maintaining the privacy of users. Such information regarding the use of personal data should be prominent and easily accessible by users and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations that may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in some embodiments, an explicit "opt-in" may be required to share location information with other users of a multi-player session. The permission may be limited to a certain time duration, e.g., the duration of the multi-player session, etc. In another example, in some embodiments, a user may be able to limit the sharing of information of the EEC knowledge database to any of the following: sharing between EECs running on the same UE, sharing between EECs running on different devices used exclusively by the same user, sharing between EECs running on different UEs within a trusted user community (e.g., a family), or sharing between EECs of the same EEC identity.

It is the intent of the present disclosure that personal information data should be managed and handled in a way to minimize risks of unintentional or unauthorized access or use. In addition to the examples provided above, risk can be minimized by limiting the collection of data and deleting data once it is no longer needed. When applicable, data de-identification can be used to protect a user's privacy. De-identification may be facilitated, when appropriate, by removing identifiers, controlling the granularity or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, the exemplary EAS discovery mechanisms described herein do not require a specific location and the location granularity may be limited to a high level, e.g., cell-ID of a serving cell, tracking area ID, EAS service area, etc.

It will be apparent to those skilled in the art that various modifications may be made in the present disclosure, without departing from the scope of the disclosure. Thus, it is intended that the present disclosure cover modifications and variations of this disclosure provided they come within the scope of the appended claims.

## Claims

1. A processor of a user equipment (110), UE, configured to perform operations comprising:
receiving location information associated with other devices that are to participate in a session with the UE;
transmitting an edge application server, EAS, discovery request to an edge enabler server (174), EES, wherein the EAS discovery request includes UE location information and the location information associated with the other devices; and
receiving a discovery response from the EES, wherein the discovery response comprises EAS endpoint information.

2. The processor of claim 1, wherein the location information of the other devices is included in an EAS discovery filter information element, IE, of the EAS discovery request.

3. The processor of claim 2, wherein the EAS discovery filter IE is included in a list of application client characteristics.

4. The processor of claim 2, wherein the EAS discovery filter IE is included in a list of EAS characteristics.

5. The processor of claim 1, wherein the EAS discovery filter further comprises EAS selection criteria, wherein the EAS selection criteria is to select an EAS configured to provide a same or similar latency to the UE and the other devices of the session.

6. The processor of claim 1, wherein the UE and the other devices receive the same EAS endpoint information.

7. The processor of claim 1, wherein the location information of the other devices conceals an exact location of the other devices.

8. The processor of claim 7, wherein the location information comprises (i) an area comprising a geographic circle around a center of mass of the locations of the UE and the other devices, (ii) an area comprising a geographic circle around a location of a specific other device for which predefined service key performance indicators, KPIs, are to be used, or (iii) an area including a location of the UE and the locations of one or more other devices that want to join the session.

9. An edge enabler server (174), EES, configured to perform operations, comprising:
receiving an edge application server, EAS, discovery request from a user equipment (110), UE, wherein the EAS discovery request includes UE location information and location information associated with the other devices that are to participate in a session with the UE; and
transmitting a discovery response from the EES, wherein the discovery response comprises EAS endpoint information.

10. The EES of claim 9, wherein the EAS endpoint information is selected based on the UE location information and the information associated with the other devices.

11. The EES of claim 9, wherein the location information of the other devices is included in an EAS discovery filter information element, IE, of the EAS discovery request.

12. The EES of claim 11, wherein the EAS discovery filter further comprises EAS selection criteria.

13. The EES of claim 12, wherein the EAS selection criteria is an EAS configured to provide a same or a similar latency to the UE and the other devices of the session.

14. The EES of claim 9, the operations further comprising:
receiving an EAS discovery request from each of the other devices, wherein the EAS discovery request from each of the other devices comprises location information associated with the UE and each of the other devices, and
sending the same EAS endpoint information to the UE and the other devices.

## Patentansprüche

1. Prozessor einer Benutzereinrichtung (110), UE, der konfiguriert ist, um Abläufe durchzuführen, umfassend:
Empfangen von Standortinformationen, die mit anderen Vorrichtungen verknüpft sind, die an einer Sitzung mit der UE teilzunehmen haben;
Übertragen einer Edge-Anwendungsserver-Entdeckungsanfrage, EAS-Entdeckungsanfrage, an einen Edge-Enabler-Server (174), EES, wobei die EAS-Entdeckungsanfrage UE-Standortinformationen und die Standortinformationen einschließt, die mit den anderen Vorrichtungen verknüpft sind; und
Empfangen einer Entdeckungsantwort von dem EES, wobei die Entdeckungsantwort EAS-Endpunktinformationen umfasst.

2. Prozessor nach Anspruch 1, wobei die Standortinformationen der anderen Vorrichtungen in einem Informationselement, IE, eines EAS-Entdeckungsfilters der EAS-Entdeckungsanfrage eingeschlossen sind.

3. Prozessor nach Anspruch 2, wobei das IE des EAS-Entdeckungsfilters in einer Liste von Anwendungs-Client-Merkmalen eingeschlossen ist.

4. Prozessor nach Anspruch 2, wobei das IE des EAS-Entdeckungsfilters in einer Liste von EAS-Merkmalen eingeschlossen ist.

5. Prozessor nach Anspruch 1, wobei der EAS-Entdeckungsfilter ferner EAS-Auswahlkriterien umfasst, wobei die EAS-Auswahlkriterien einen EAS auszuwählen haben, der konfiguriert ist, um eine gleiche oder ähnliche Latenz an die UE und die anderen Vorrichtungen der Sitzung bereitzustellen.

6. Prozessor nach Anspruch 1, wobei die UE und die anderen Vorrichtungen die gleichen EAS-Endpunktinformationen empfangen.

7. Prozessor nach Anspruch 1, wobei die Standortinformationen der anderen Vorrichtungen einen exakten Standort der anderen Vorrichtungen verbergen.

8. Prozessor nach Anspruch 7, wobei die Standortinformationen (i) einen Bereich, umfassend einen geografischen Kreis um einen Massenschwerpunkt der Standorte der UE und der anderen Vorrichtungen, (ii) einen Bereich, umfassend einen geografischen Kreis um einen Standort einer spezifischen anderen Vorrichtung, für das vorgegebene Service-Key-Performance-Indicators, Service-KPls, zu verwenden sind, oder (iii) einen Bereich umfassen, der einen Standort der UE und die Standorte einer oder mehrerer anderer Vorrichtungen einschließt, die der Sitzung beitreten wollen.

9. Edge-Enabler-Server (174), EES, der konfiguriert ist, um Abläufe durchzuführen, umfassend:
Empfangen einer Edge-Anwendungsserver-Entdeckungsanfrage, EAS-Entdeckungsanfrage, von einer Benutzereinrichtung (110), UE, wobei die EAS-Entdeckungsanfrage UE-Standortinformationen und Standortinformationen einschließt, die mit den anderen Vorrichtungen verknüpft sind, die an einer Sitzung mit der UE teilzunehmen haben; und
Übertragen einer Entdeckungsantwort von dem EES, wobei die Entdeckungsantwort EAS-Endpunktinformationen umfasst.

10. EES nach Anspruch 9, wobei die EAS-Endpunktinformationen basierend auf den UE-Standortinformationen und den Informationen ausgewählt werden, die mit den anderen Vorrichtungen verknüpft sind.

11. EES nach Anspruch 9, wobei die Standortinformationen der anderen Vorrichtungen in einem Informationselement, IE, des EAS-Entdeckungsfilters der EAS-Entdeckungsanfrage eingeschlossen sind.

12. EES nach Anspruch 11, wobei der EAS-Entdeckungsfilter ferner EAS-Auswahlkriterien umfasst.

13. EES nach Anspruch 12, wobei die EAS-Auswahlkriterien ein EAS sind, der konfiguriert ist, um eine gleiche oder eine ähnliche Latenz an die UE und die anderen Vorrichtungen der Sitzung bereitzustellen.

14. EES nach Anspruch 9, die Abläufe ferner umfassend:
Empfangen einer EAS-Entdeckungsanfrage von jeder der anderen Vorrichtungen, wobei die EAS-Entdeckungsanfrage von jeder der anderen Vorrichtungen Standortinformationen umfasst, die mit der UE und jeder der anderen Vorrichtungen verknüpft sind, und
Senden der gleichen EAS-Endpunktinformationen an die UE und die anderen Vorrichtungen.

## Revendications

1. Processeur d'un équipement utilisateur (110), UE, configuré pour effectuer des opérations comprenant :
la réception d'informations d'emplacement associées à d'autres dispositifs qui doivent participer à une session avec l'UE ;
la transmission d'une demande de découverte d'un serveur d'application de périphérie, EAS, à un serveur d'activation de périphérie (174), EES, dans lequel la demande de découverte de l'EAS comporte des informations d'emplacement d'UE et les informations d'emplacement associées aux autres dispositifs ; et
la réception d'une réponse de découverte de la part de l'EES, dans lequel la réponse de découverte comprend des informations sur le point d'extrémité de l'EAS.

2. Processeur selon la revendication 1, dans lequel les informations d'emplacement des autres dispositifs sont incluses dans un élément d'information de filtre, IE, de découverte EAS de la demande de découverte EAS.

3. Processeur selon la revendication 2, dans lequel l'IE de filtre de découverte EAS est inclus dans une liste de caractéristiques de client d'application.

4. Processeur selon la revendication 2, dans lequel l'IE de filtre de découverte EAS est inclus dans une liste de caractéristiques EAS.

5. Processeur selon la revendication 1, dans lequel le filtre de découverte EAS comprend en outre des critères de sélection EAS, dans lequel les critères de sélection EAS consistent à sélectionner un EAS configuré pour fournir une latence identique ou similaire à l'UE et aux autres dispositifs de la session.

6. Processeur selon la revendication 1, dans lequel l'UE et les autres dispositifs reçoivent les mêmes informations sur le point final EAS.

7. Processeur selon la revendication 1, dans lequel les informations d'emplacement des autres dispositifs dissimulent un emplacement exact des autres dispositifs.

8. Processeur selon la revendication 7, dans lequel les informations d'emplacement comprennent (i) une zone comprenant un cercle géographique autour d'un centre de masse des emplacements de l'UE et des autres dispositifs, (ii) une zone comprenant un cercle géographique autour d'un emplacement d'un autre dispositif spécifique pour lequel des indicateurs clés de performance, KPI, de service prédéfinis doivent être utilisés, ou (iii) une zone comportant une localisation de l'UE et les localisations d'un ou plusieurs autres dispositifs qui souhaitent rejoindre la session.

9. Serveur d'activation de périphérie (174), EES, configuré pour réaliser des opérations, comprenant :
la réception d'une demande de découverte de serveur d'application de périphérie, EAS, provenant d'un équipement utilisateur (110), UE, dans lequel la demande de découverte EAS comporte des informations d'emplacement d'UE et des informations d'emplacement associées aux autres dispositifs qui doivent participer à une session avec l'UE ; et
la transmission d'une réponse de découverte à partir de l'EES, dans lequel la réponse de découverte comprend des informations sur le point final de l'EAS.

10. EES selon la revendication 9, dans lequel les informations sur le point final EAS sont sélectionnées sur la base des informations d'emplacement d'UE et des informations associées aux autres dispositifs.

11. EES selon la revendication 9, dans lequel les informations d'emplacement des autres dispositifs sont incluses dans un élément d'information de filtre, IE, de découverte EAS de la demande de découverte EAS.

12. EES selon la revendication 11, dans lequel le filtre de découverte EAS comprend en outre des critères de sélection EAS.

13. EES selon la revendication 12, dans lequel le critère de sélection EAS est un EAS configuré pour fournir une latence identique ou similaire à l'UE et aux autres dispositifs de la session.

14. EES selon la revendication 9, les opérations comprenant en outre :
la réception d'une demande de découverte EAS provenant de chacun des autres dispositifs, dans lequel la demande de découverte EAS provenant de chacun des autres dispositifs comprend des informations d'emplacement associées à l'UE et à chacun des autres dispositifs, et
l'envoi des mêmes informations de point final EAS à l'UE et aux autres dispositifs.
